# EUROPÄISCHE PATENTSCHRIFT

(11) **EP 2 919 911 B1**
(45) Veröffentlichungstag und Bekanntmachung des Hinweises auf die Patenterteilung: **11.01.2017**
(21) Anmeldenummer: 13791935.3
(22) Anmeldetag: 08.11.2013
(51) Int. Cl.: B01L 3/02, B05B 11/00

(54) **PIPETTE UND VERFAHREN ZUM PIPETTIEREN**
PIPETTE AND METHOD OF PIPETTING
PIPETTE ET METHODE DE PIPETTAGE

(30) Priorität: 13.11.2012 DE 102012022121
(43) Veröffentlichungstag der Anmeldung: 23.09.2015
(73) Patentinhaber: Sartorius Lab Instruments GmbH & Co. KG, 37079 Göttingen (DE)
(72) Erfinder: GRABOSCH, Matthias, 37120 Bovenden (DE)
(86) Internationale Anmeldenummer: PCT/EP2013/003373
(87) Internationale Veröffentlichungsnummer: WO 2014/075784

(56) Entgegenhaltungen:
- DE-A1- 19 827 035
- GB-A- 221 032
- US-A- 5 533 879
- US-B1- 6 220 835

## Beschreibung

### Gebiet der Erfindung

Die Erfindung betrifft eine Pipette mit einer in einem Gehäuse angeordneten ersten Kammer und einer zu einer Pipettenspitze mit einem Ausgangskanal hin sich anschließenden zweiten Kammer, die von einem längsverschieblichen Kolben mit einem Kolbenrückschlagventil voneinander getrennt sind, und mit einem dem Ausgangskanal vorgelagerten Kammerrückschlagventil der zweiten Kammer, wobei die erste Kammer über eine direkte Zuleitung mit Flüssigkeit befüllbar ist.

Die Erfindung betrifft weiterhin ein Verfahren zum Pipettieren einer Flüssigkeit mit der Pipette.

### Stand der Technik

Beim Pipettieren wird üblicherweise eine zu pipettierende Flüssigkeit in eine Kammer der Pipette über die Pipettenspitze angesaugt, um sie anschließend über die Pipettenspitze in vorgebbarer Menge abzugeben.

Beispielsweise ist aus der DE 26 58 592 A1 eine Pipette mit einer in einem Gehäuse angeordneten ersten Kammer und einer zu einer Pipettenspitze hin sich anschließenden zweiten Kammer bekannt. Die Pipettenspitze weist dabei einen Ausgangskanal auf, über den auch die erste Kammer der zu pipettierenden Flüssigkeit gefüllt werden kann. Die beiden Kammern sind dabei von einem längsverschieblichen Kolben, der ein Rückschlagventil aufweist, voneinander getrennt. Dem Ausgangskanal ist dabei zur zweiten Kammer hin ein Kammerrückschlagventil vorgelagert. Bei Ansaugen nur einer Flüssigkeit wird ein in dem Kammerrückschlagventil geführter Hilfskolben entfernt, so dass das Kammerrückschlagventil überbrückt wird.

Nachteilig bei den bekannten Pipetten ist, dass beim Auffüllen der Kammern durch Ansaugen von Flüssigkeit über die Pipettenspitze eine Kontamination stattfinden kann. Weiterhin nachteilig ist, dass beim Ansaugen von Flüssigkeit Gase aus der Umgebung mit der Flüssigkeit in Berührung kommen oder auch Umgebungsluft mit angesaugt wird. Insbesondere bei der Verwendung von Reinstwasser als zu pipettierende Flüssigkeit ist der Kontakt mit der Atmosphäre nachteilig, da dabei Kohlendioxid im Reinstwasser gelöst und somit Kohlensäure gebildet wird.

Weiterhin ist aus der US 6 220 835 B1 eine Dosiervorrichtung mit einer ersten Kammer und einer zu einem Ausgangskanal hin sich anschließenden zweiten Kammer bekannt, die von einem längsverschieblichen Kolben mit einem Kolbenrückschlagventil voneinander getrennt sind. Die zweite Kammer weist ein dem Ausgangskanal vorgelagertes Kammerrückschlagventil auf. Die erste Kammer ist über eine direkte Zuleitung mit Flüssigkeit befüllbar.

Nachteilig bei der bekannten Vorrichtung ist, dass bei Abfüllung von zu pipettierender Flüssigkeit in einen Zwischenbehälter, insbesondere mit Reinstwasser als zu pipettierender Flüssigkeit, es zum Herauslösen von anorganischen Ionen oder Bestandteilen kommen kann. Die Qualität des flüssigen Mediums kann dabei absinken.

Aus der GB 221 032 A ist eine Spritze oder eine Sprühvorrichtung bekannt, die in einem zylindrischen Gehäuse eine erste und eine zweite Kammer aufweist, die von einem längsverschieblichen Kolben mit einem Rückschlagventil voneinander getrennt sind. Der mit dem Ausgangskanal verbundenen zweiten Kammer ist zum Ausgangskanal hin ein Rückschlagventil vorgelagert. Die erste Kammer ist über eine Zuleitung mit Flüssigkeit befüllbar. Flüssigkeit aus der ersten Kammer kann dabei lediglich über die zweite Kammer und den Spritzenausgang abgeleitet werden. An ihrem dem Spritzenausgang abgewandten Ende weist das Gehäuse eine Halterung auf, an der eine Ersatzdüse aufgeschraubt werden kann. Die Ersatzdüse ist offensichtlich vorgesehen, um gegen die Düse ausgetauscht zu werden.

Nachteilig bei dieser bekannten Spritze oder Sprühvorrichtung ist, dass soweit ein Fachmann sie zur Abfüllung von zu pipettierender Flüssigkeit in einen Zwischenbehälter, insbesondere mit Reinstwasser als zu pipettierender Flüssigkeit nutzen würde, es zum Herauslösen von anorganischen Ionen oder Bestandteilen kommen kann. Die Qualität des flüssigen Mediums kann dabei unerwünscht absinken.

Nachteilig bei der bekannten Vorrichtung ist weiter, dass der Kolben aus einem mit einer Kolbenstange verbundenem ersten am Umfang nicht dichtenden Kopfteil und einem dichtenden Dichtungsteil besteht, das gegenüber dem Kopfteil längsverschieblich angeordnet ist und einen Durchgangskanal aufweist, der bei Verschieben des Kopfteils in Richtung Ausgangskanal von einer Anlagefläche des Kopfteiles verschlossen wird.

Aus der DE 198 27 035 A1 ist eine Dosiervorrichtung mit einer ersten Kammer und einer zu einem Abgabeventil hin sich anschließenden zweiten Kammer bekannt, die von einem längsverschieblichen Kolben mit einem Kolbenrückschlagventil voneinander getrennt sind. Die erste Kammer ist über eine direkte Zuleitung insbesondere mit viskoser Flüssigkeit befüllbar.

Auch diese Vorrichtung weist die oben beschriebenen Nachteile auf.

Aus der US 4 118 152 A ist eine Dosierpumpe bekannt, die über eine Saugleitung und ein Saugventil mittels eines Kolbens Flüssigkeit in eine erste Kammer einsaugt und anschließend über ein Kolbenventil in eine zweite Kammer einleitet und beim Füllen der ersten Kammer aus der zweiten Kammer über einen Ausgang ausstößt. Das Saugventil und das Kolbnenventil haben eine entgegengesetzte Fließrichtung.

Auch diese Dosierpumpe weist die oben beschriebenen Nachteile auf.

Aus der DE 196 32 348 C1 ist eine Kolbenbürette bekannt, die eine Dosierkammer mit zwei nebeneinander angeordneten Ventilen, einem Ansaugventil und einem Ausstoßventi, aufweist. Mittels eines Kolbens wird über das Ansaugventil Flüssigkeit aus einem Vorratsbehälter angesaugt, wobei das Ausstoßventil geschlossen ist, und bei geschlossenem Anssaugventil wird die Flüssigkeit aus der Dosierkammer über das geöffnete Ausstoßventil ausgestoßen.

Auch diese Dosierpumpe weist die oben beschriebenen Nachteile auf.

Aus der DE 297 03 080 U1 ist eine Vorrichtung zum Abgeben von Flüssigkeiten bekannt, in der ein Rückschlagventil angeordnet ist. Das Rückschlagventil ist einer Ausstoßkanüle vorgelagert und besteht aus einer Ventilkugel, die von einer Ventilfeder gegen einen Ventilsitz gedrückt wird.

### Aufgabenstellung

Es ist die Aufgabe der vorliegenden Erfindung, die bekannten Pipetten so zu verbessern, dass beim Befüllen der Kammern keine Kontamination und kein Kontakt mit der Atmosphäre stattfinden und ein Verfahren zum Pipettieren von Flüssigkeit vorzuschlagen. Insbesondere soll in Verbindung mit Reinstwasser als zu pipettierender Flüssigkeit, ein Herauslösen von anorganischen Ionen oder Bestandteilen vermieden werden.

### Darlegung der Erfindung

Die Aufgabe bezüglich der Pipette wird in Verbindung mit dem Oberbegriff des Anspruches 1 dadurch gelöst, dass die erste Kammer über die Zuleitung und eine Ableitung mit einem Rezirkulationskreislauf eines Vorratsbehälters mit zu pipettierender Flüssigkeit oder einer Reinstwasseranlage verbunden ist.

Durch die Befüllung der ersten Kammer über eine direkte oder separate Zuleitung und das Kammerrückschlagventil, wird ein Ansaugen der zu pipettierenden Flüssigkeit über die Pipettenspitze zuverlässig vermieden. Damit fallen die mit dem Ansaugen von Flüssigkeit über die Pipettenspitze verbundenen Nachteile, wie Kontamination und unerwünschter Atmosphärenkontakt weg.
Durch die Rezirkulation wird eine gleich bleibend hohe Qualität des flüssigen Mediums gewährleistet. Durch die direkte Verbindung mit einem Vorratsbehälter / einer Reinstwasseranlage entfällt das Abfüllen von zu pipettierender Flüssigkeit / Reinstwasser in ein Zwischengefäß, in dem es zum Herauslösen von anorganischen Ionen oder organischen Bestandteilen kommen kann, weg. Hinzu kommen die bereits oben genannten Vorteile.

Nach einer weiteren bevorzugten Ausführungsform der Erfindung bilden die erste und die zweite Kammer eine gemeinsame Kammer. Dabei teilt der längsverschiebliche Kolben die gemeinsame Kammer in die erste und zweite Kammer auf, wobei der Kolben durch seine Stellung die Volumina der Kammern bestimmt. Wird der Kolben in Richtung Pipettenspitze bzw. Kammerrückschlagventil bewegt, verringert sich das Volumen der ersten Kammer, während das Volumen der zweiten Kammer entsprechend zunimmt.

Nach einer weiteren bevorzugten Ausführungsform der Erfindung schlägt in einer Ruhestellung der Kolben zum Kammerrückschlagventil hin an, so dass die zweite Kammer ihr Minimalvolumen, beispielsweise Null, aufweist, während die erste Kammer ihr Maximalvolumen aufweist. In der Ruhestellung sind dabei das Kolbenrückschlagventil und das Kammerrückschlagventil geschlossen.

Nach einer weiteren bevorzugten Ausführungsform der Erfindung ist in einer Füllstellung zum Füllen der zweiten Kammer der Kolben zur ersten Kammer hin verbschiebbar. In der Füllstellung ist das Kolbenrückschlagventil offen, während das Kammerrückschlagventil geschlossen ist.

Nach einer weiteren bevorzugten Ausführungsform der Erfindung ist in einer Entleerstellung zum Entleeren der zweiten Kammer über den Ausgangskanal der Pipettenspitze der Kolben zur zweiten Kammer hin verschiebbar. Durch Verschieben des Kolbens zur zweiten Kammer hin, lässt sich die zu pipettierende Flüssigkeit mit vorbestimmten Volumen über den Ausgangskanal der Pipettenspitze ausstoßen. In der Entleerstellung ist das Kolbenrückschlagventil geschlossen, während das Kammerrückschlagventil geöffnet ist.

Gemäß einer weiteren bevorzugten Ausführungsform der Erfindung ist der Kolben über einen außen am Gehäuse angeordneten Antrieb verschiebbar. Insbesondere ist der Kolben über eine Kolbenstange mit dem Antrieb verbunden. Der Antrieb kann beispielsweise als ein Elektromotor ausgebildet sein.

Gemäß einer weiteren bevorzugten Ausführungsform der Erfindung sind die flüssigkeitsberührenden Teile aus wenig extrahierbare Bestandteile abgebenden Materialien, wie Polyvinylidenfluorid (PVDF) ausgebildet. Dies ist insbesondere bei der Verwendung von Reinstwasser als zu pipettierender Flüssigkeit von Vorteil.

Die Aufgabe bezüglich des Verfahrens wird in Verbindung mit dem Oberbegriff des Anspruches 12 dadurch gelöst, dass folgende Schritte durchgeführt werden:
a) Befüllen der ersten Kammer mit Flüssigkeit über eine direkte Zuleitung,
b) Befüllen der zweiten Kammer mit der Flüssigkeit aus der ersten Kammer durch Zurückziehen des Kolbens in der Füllstellung in Richtung der ersten Kammer bei geöffnetem Kolbenrückschlagventil und geschlossenem Kammerrückschlagventil und
c) Entleeren der zweiten Kammer durch Vorschieben des Kolbens in der Entleerstellung in Richtung des der ersten Kammer abgewandten Ausgangskanals bei geschlossenem Kolbenrückschlagventil und geöffnetem Kammerrückschlagventil.

Durch die Befüllung der ersten Kammer über eine direkte oder separate Zuleitung und das Kammerrückschlagventil, wird ein Ansaugen der zu pipettierenden Flüssigkeit über die Pipettenspitze zuverlässig vermieden. Damit fallen die mit dem Ansaugen von Flüssigkeit über die Pipettenspitze verbundenen Nachteile, wie Kontamination und unerwünschter Atmosphärenkontakt weg. Die durch das Zurückziehen und Vorschieben des Kolbens entstehenden unterschiedlichen Drücke öffnen und schließen jeweils die Rückschlagventile in der vorgesehenen weise.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht im Schnitt einer Pipette, deren Kolben sich in einer Ruhestellung befindet;
- Figur 2:: eine Seitenansicht im Schnitt der Pipette von Figur 1, wobei der Kolben sich in einer Füllstellung befindet und
- Figur 3:: eine Seitenansicht im Schnitt der Pipette von Figur 1, wobei sich der Kolben in einer Entleerstellung zum Ausstoßen von Flüssigkeit aus der Pipettenspitze befindet.

### Beschreibung bevorzugter Ausführungsformen

Eine Pipette 1 besteht im Wesentlichen aus einem Gehäuse 2, einer ersten Kammer 3, einer zweiten Kammer 4, einem Kolben 5 und einer Pipettenspitze 6.

Die erste Kammer 3 und die zweite Kammer 4 bilden eine gemeinsame Kammer 7, die von dem Kolben 5 in die erste Kammer 3 und zweite Kammer 4 unterteilt wird. Somit sind die erste Kammer 3 und die zweite Kammer 4 durch den Kolben 5 voneinander getrennt. Die Pipettenspitze 6 weist einen Ausgangskanal 8 auf, dem zur zweiten Kammer 4 hin ein Kammerrückschlagventil 9 vorgelagert ist. Das Kammerrückschlagventil 9 bildet gegenüber dem pipettenspitzenseitigen Ende 10 des Kolbens 5 mit seinem kammerseitigen Ende 11 einen Anschlag. Der Kolben 5 ist längsverschieblich in der gemeinsamen Kammer 7 gelagert und über eine Kolbenstange 12 mit einem Antrieb 13 verbunden.

Die erste Kammer 3 ist an ihrem der Pipettenspitze 6 abgewandten oberen Ende 14 mit einer Zuleitung 15 und einer Ableitung 16 mit einem Rezirkulationskreislauf 17 einer Reinstwasseranlage 18, wie sie beispielsweise von Sartorius unter der Bezeichnung ARIUM® angeboten wird, verbunden.

Der Kolben 5 weist ein Kolbenrückschlagventil 19 auf, über das Flüssigkeit aus der ersten Kammer 3 in die zweite Kammer 4 einfüllbar ist. Ein Eindringen von Flüssigkeit aus der zweiten Kammer 4 in die erste Kammer 3 wird durch das Kolbenrückschlagventil 19 verhindert. Durch das Kammerrückschlagventil 9 wird verhindert, dass ein Fluid von außerhalb über den Ausgangskanal 8 in die zweite Kammer 4 eindringen kann.

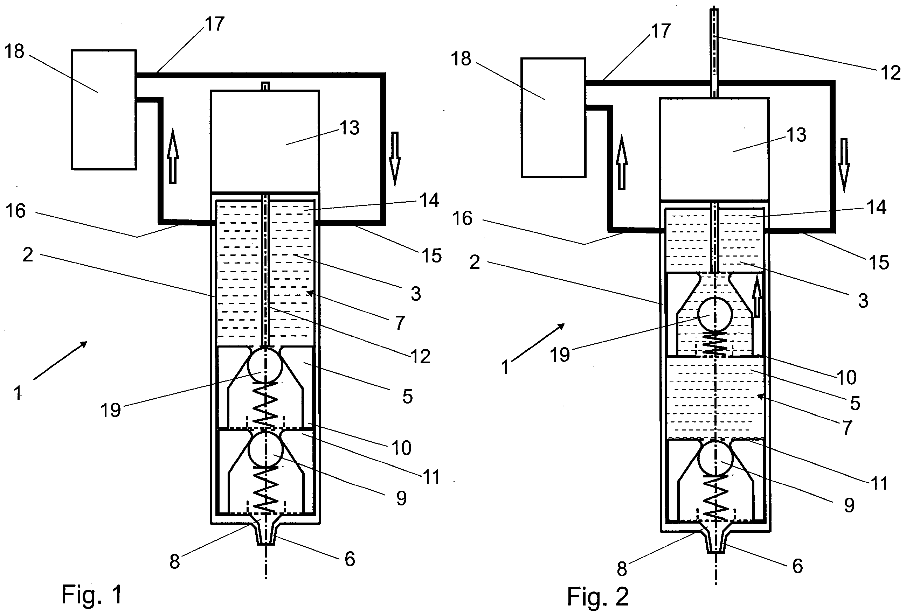

Entsprechend Figur 1 schlägt in einer Ruhestellung der Kolben 5 mit seinem pipettenspitzenseitigen Ende 10 an das kammerseitige Ende 11 des Kammerrückschlagventils 9 an. Die zweite Kammer 4 weist dabei ein Minimalvolumen von Null auf, während die erste Kammer 3 ihr Maximalvolumen aufweist. Das Kolbenrückschlagventil 19 und das Kammerrückschlagventil 9 sind in der Ruhestellung geschlossen.

Entsprechend Figur 2 wird in einer Füllstellung zum Füllen der zweiten Kammer 4 der Kolben 5 zur ersten Kammer 3 hin verschoben. Dabei ist das Kolbenrückschlagventil 19 des Kolbens 5 geöffnet, während das Kammerrückschlagventil 9 in seiner geschlossenen Stellung verbleibt.

In einer Entleerstellung oder Ausstoßstellung zum Entleeren der zweiten Kammer 4 über den der Pipettenspitze 6 angeordneten Ausgangskanal 8 wird der Kolben 5 zur zweiten Kammer 4 hin, d.h. in Richtung Pipettenspitze 6 hin verschoben. Das Kolbenrückschlagventil 19 ist dabei geschlossen, während das Kammerrückschlagventil 9 geöffnet ist, so dass die in der zweiten Kammer 4 befindliche Flüssigkeit aus dem Ausgangskanal 8 der Pipettenspitze 6 ausgestoßen wird.

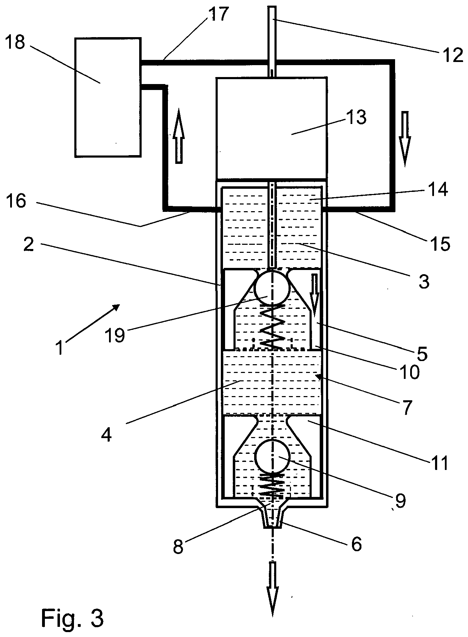

Die flüssigkeitsberührenden Teile der Figuren 1 bis 3 sind aus einem Polyvinylidenfluorid ausgebildet.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Pipette
- 2: Gehäuse
- 3: erste Kammer
- 4: zweite Kammer
- 5: Kolben
- 6: Pipettenspitze
- 7: gemeinsame Kammer
- 8: Ausgangskanal von 6
- 9: Kammerrückschlagventil
- 10: pipettenspitzenseitiges Ende von 9
- 11: kammerseitiges Ende von 9
- 12: Kolbenstange
- 13: Antrieb
- 14: oberes Ende von 3
- 15: Zuleitung
- 16: Ableitung
- 17: Rezirkulationskreislauf
- 18: Vorratsbehälter oder Reinstwasseranlage
- 19: Kolbenrückschlagventil

## Patentansprüche

1. Pipette (1) mit einer in einem Gehäuse (2) angeordneten ersten Kammer (3) und einer zu einer Pipettenspitze (6) mit einem Ausgangskanal (8) hin sich anschließenden zweiten Kammer (4), die von einem längsverschieblichen Kolben (5) mit einem Kolbenrückschlagventil (19) voneinander getrennt sind und mit einem dem Ausgangskanal (8) vorgelagerten Kammerrückschlagventil (9) der zweiten Kammer (4), wobei die erste Kammer (3) über eine direkte Zuleitung (15) mit Flüssigkeit befüllbar ist,
**dadurch gekennzeichnet,**
**dass** die erste Kammer (3) über die Zuleitung (15) und eine Ableitung (16) mit einem Rezirkulationskreislauf (17) eines Vorratsbehälters mit zu pipettierender Flüssigkeit oder einer Reinstwasseranlage (18) verbunden ist.

2. Pipette nach Anspruch 1,
**dadurch gekennzeichnet,**
**dass** die erste und die zweite Kammer (3, 4) eine gemeinsame Kammer (7) bilden, dass der längsverschiebliche Kolben (5) die gemeinsame Kammer (7) in die erste und zweite Kammer (3, 4) aufteilt und
**dass** der Kolben (5) durch seine Stellung die Volumina der Kammern (3, 4) bestimmt.

3. Pipette nach Anspruch 1 oder 3,
**dadurch gekennzeichnet,**
**dass** in einer Ruhestellung der Kolben (5) zum Kammerrückschlagventil (9) hin anschlägt und die zweite Kammer (4) ihr Minimalvolumen aufweist, während die erste Kammer (3) ihr Maximalvolumen aufweist.

4. Pipette nach Anspruch 3,
**dadurch gekennzeichnet,**
**dass** in der Ruhestellung das Kolbenrückschlagventil (19) und das Kammerrückschlagventil (9) geschlossen sind.

5. Pipette nach einem der Ansprüche 1 bis 4,
**dadurch gekennzeichnet,**
**dass** in einer Füllstellung zum Füllen der zweiten Kammer (4) der Kolben (5) zur ersten Kammer (3) hin verbschiebbar ist.

6. Pipette nach Anspruch 5,
**dadurch gekennzeichnet,**
**dass** in der Füllstellung das Kolbenrückschlagventil (19) offen und das Kammerrückschlagventil (9) geschlossen ist.

7. Pipette nach einem der Ansprüche 1 bis 6,
**dadurch gekennzeichnet,**
**dass** in einer Entleerstellung zum Entleeren der zweiten Kammer (4) über den Ausgangskanal (8) der Pipettenspitze (6) der Kolben (5) zur zweiten Kammer (4) hin verschiebbar ist.

8. Pipette nach Anspruch 7,
**dadurch gekennzeichnet,**
**dass** in der Entleerstellung das Kolbenrückschlagventil (19) geschlossen und das Kammerrückschlagventil (9) geöffnet ist.

9. Pipette nach einem der Ansprüche 1 bis 8,
**dadurch gekennzeichnet,**
**dass** der Kolben (5) über einen außen am Gehäuse (2) angeordneten Antrieb (13) verschiebbar ist.

10. Pipette nach Anspruch 9,
**dadurch gekennzeichnet,**
**dass** der Kolben (5) über eine Kolbenstange (12) mit dem Antrieb (13) verbunden ist.

11. Pipette nach einem der Ansprüche 1 bis 10,
**dadurch gekennzeichnet,**
**dass** die flüssigkeitsberührenden Teile aus Polyvinylidenfluorid ausgebildet ist.

12. Verfahren zum Pipettieren einer Flüssigkeit mittels einer Pipette nach einem der vorstehenden Ansprüche,
**dadurch gekennzeichnet,**
**dass** die Flüssigkeit der ersten Kammer über den Rezirkulationskreislauf (17) des Vorratsbehälters oder der Reinstwasseranlage (18) rezirkuliert und
**dass** folgende Schritte durchgeführt werden:
a) Befüllen der ersten Kammer (3) mit Flüssigkeit über eine direkte Zuleitung (15),
b) Befüllen der zweiten Kammer (4) mit der Flüssigkeit aus der ersten Kammer (3) durch Zurückziehen des Kolbens (5) in der Füllstellung in Richtung der ersten Kammer (3) bei geöffnetem Kolbenrückschlagventil (19) und geschlossenem Kammerrückschlagventil (9) und
c) Entleeren der zweiten Kammer (4) durch Vorschieben des Kolbens (5) in der Entleerstellung in Richtung des der ersten Kammer (3) abgewandten Ausgangskanals (8) bei geschlossenem Kolbenrückschlagventil (19) und geöffnetem Kammerrückschlagventil (9).

## Claims

1. Pipette (1) with first chamber (3) arranged in a housing (2) and a second chamber (4) connected with a pipette tip (6) by an outlet channel (8), the chambers being separated from one another by a longitudinally displaceable piston (5) with a piston non-return valve (19), and with a chamber non-return valve (9), which is upstream of the outlet channel (8), of the second chamber (4), wherein the first chamber (3) is fillable with liquid by way of a direct feed (15), **characterised in that** the first chamber (3) is connected by way of the feed (15) and a drain (16) with a recirculation circuit (17) of a storage container with liquid to be pipetted or a super-clean water plant (18).

2. Pipette according to claim 1, **characterised in that** the first and second chambers (3, 4) form a common chamber (7), that the longitudinally displaceable piston (5) divides the common chamber (7) into the first and second chambers (3, 4) and that the piston (5) determines the volumes of the chambers (3, 4) by its setting.

3. Pipette according to claim 1 or 2, **characterised in that** in a rest setting the piston (5) abuts the chamber non-return valve (9) and the second chamber (4) has its minimum volume, whilst the first chamber (3) has its maximum volume.

4. Pipette according to claim 3, **characterised in that** in the rest setting the piston non-return valve (19) and the chamber non-return valve (9) are closed.

5. Pipette according to any one of claims 1 to 4, **characterised in that** in a filling setting for filling of the second chamber (4) the piston (5) is displaceable towards the first chamber (3).

6. Pipette according to claim 5, **characterised in that** in the filling setting the piston non-return valve (19) is open and the chamber non-return valve (9) is closed.

7. Pipette according to any one of claims 1 to 6, **characterised in that** in an emptying setting for emptying the second chamber (4) by way of the outlet channel (8) of the pipette tip (6) the piston (5) is displaceable towards the second chamber (4).

8. Pipette according to claim 7, **characterised in that** in the emptying setting the piston non-return valve (19) is closed and the chamber non-return valve (9) is open.

9. Pipette according to any one of claims 1 to 8, **characterised in that** the piston (5) is displaceable by way of a drive (13) arranged externally at the housing (2).

10. Pipette according to claim 9, **characterised in that** the piston (5) is connected with the drive (13) by way of a piston rod (12).

11. Pipette according to any one of claims 1 to 10, **characterised in that** the liquid-contacting parts are made of polyvinylidenefluoride.

12. Method for pipetting a liquid by means of a pipette according to any one of the preceding claims, **characterised in that** the liquid of the first chamber is recirculated by way of the recirculation circuit (17) of the storage container or the super-clean water plant (18) and that the following steps are carried out:
a) filling the first chamber (3) with liquid by way of a direct feed (15),
b) filling the second chamber (4) with the liquid from the first chamber (3) by retracting the piston (5) in the filling setting in the direction of the first chamber (3) with the piston non-return valve (19) open and the chamber non-return valve (9) closed and
c) emptying the second chamber (4) by advancing the piston (5) in the emptying setting in the direction of the outlet channel (8), which is remote from the first chamber (3), with the piston non-return valve (19) closed and the chamber non-return valve (9) open.

## Revendications

1. Pipette (1) comprenant une première chambre (3) disposée dans un boîtier (2) et une deuxième chambre (4) reliée à un conduit de sortie (8) conduisant à une pointe de pipette (6), qui sont séparées l'une de l'autre par un piston (5) mobile dans le sens longitudinal au moyen d'un clapet anti-retour de piston (19) et d'un clapet anti-retour de chambre (9) de la deuxième chambre (4) disposé en amont du conduit de sortie (8), la première chambre (3) pouvant être remplie de liquide par l'intermédiaire d'une conduite d'alimentation directe (15),
**caractérisée en ce que**
la première chambre (3) est reliée par l'intermédiaire de la conduite d'alimentation (15) et par l'intermédiaire d'une conduite d'évacuation (16) à un circuit de recirculation (17) d'un réservoir contenant le liquide à pipeter ou à un système d'alimentation en eau ultra-pure (18).

2. Pipette selon la revendication 1,
**caractérisée**
**en ce que** la première et la deuxième chambre (3, 4) forment une chambre commune (7),
**en ce que** le piston (5) mobile dans le sens longitudinal divise la chambre (7) commune en la première et la deuxième chambre (3, 4) et
**en ce que** le piston (5) définit par sa position les volumes des chambres (3, 4).

3. Pipette selon la revendication 1 ou 3,
**caractérisée en ce que**
dans une position de repos, le piston (5) vient en butée en direction du clapet anti-retour de chambre (9) et la deuxième chambre (4) présente son volume minimal, tandis que la première chambre (3) présente son volume maximal.

4. Pipette selon la revendication 3,
**caractérisée en ce que**
dans la position de repos, le clapet anti-retour de piston (19) et le clapet anti-retour de chambre (9) sont fermés.

5. Pipette selon l'une quelconque des revendications 1 à 4,
**caractérisée en ce que**
dans une position de remplissage permettant le remplissage de la deuxième chambre (4), le piston (5) est mobile en direction de la première chambre (3).

6. Pipette selon la revendication 5,
**caractérisée en ce que**
dans la position de remplissage, le clapet anti-retour de piston (19) est ouvert et le clapet anti-retour de chambre (9) est fermé.

7. Pipette selon l'une quelconque des revendications 1 à 6,
**caractérisée en ce que**
dans une position de vidage permettant le vidage de la deuxième chambre (4) par l'intermédiaire du conduit de sortie (8) de la pointe de pipette (6), le piston (5) est mobile en direction de la deuxième chambre (4).

8. Pipette selon la revendication 7,
**caractérisée en ce que**
dans la position de vidage, le clapet anti-retour de piston (19) est fermé et le clapet anti-retour de chambre (9) est ouvert.

9. Pipette selon l'une quelconque des revendications 1 à 8,
**caractérisée en ce que**
le piston (5) peut être déplacé par l'intermédiaire d'un entraînement (13) disposé à l'extérieur sur le boîtier (2).

10. Pipette selon la revendication 9,
**caractérisée en ce que**
le piston (5) est relié à l'entraînement (13) par l'intermédiaire d'une tige de piston (12).

11. Pipette selon l'une quelconque des revendications 1 à 10,
**caractérisée en ce que**
les parties en contact avec le liquide sont faites de fluorure de polyvinylène.

12. Procédé de pipetage d'un liquide au moyen d'une pipette selon l'une quelconque des revendications précédentes,
**caractérisé en ce que**
le liquide de la première chambre est recyclé par l'intermédiaire du circuit de recirculation (17) du réservoir ou du système d'alimentation en eau ultra-pure (18) et **en ce que** les étapes suivantes sont effectuées :
a) le remplissage de la première chambre (3) avec du liquide par l'intermédiaire d'une conduite d'alimentation directe (15) ;
b) le remplissage de la deuxième chambre (4) avec le liquide venant de la première chambre (3) en tirant le piston (5) en arrière dans la position de remplissage en direction de la première chambre (3) lorsque le clapet anti-retour de piston (19) est ouvert et que le clapet anti-retour de chambre (9) est fermé et
c) le vidage de la deuxième chambre (4) en poussant le piston (5) dans la position de vidage en direction du conduit de sortie (8) opposé à la première chambre (3) lorsque le clapet anti-retour de piston (19) est fermé et que le clapet anti-retour de chambre (9) est ouvert.
